# EUROPEAN PATENT SPECIFICATION

(11) **EP 1 764 963 B1**
(45) Date of publication and mention of the grant of the patent: **28.10.2009**
(21) Application number: 06019344.8
(22) Date of filing: 15.09.2006
(51) Int. Cl.: H04L 12/56, H04W 16/14

(54) **Wireless communication method and information processing apparatus storing different wireless modules**
Drahtloses Kommunikationsverfahren und Informationsverarbeitungsvorrichtung, die verschiedene drahtlose Einheiten enthält
Procédé de communication sans fil et dispositif de traitement d'information stockant différents modules sans fil

(30) Priority: 20.09.2005 JP 2005272126
(43) Date of publication of application: 21.03.2007
(73) Proprietor: ALPS ELECTRIC CO., LTD., Tokyo 145-8501 (JP)
(72) Inventor: Sato, Takeo, c/o ALPS ELECTRIC CO., LTD., Tokyo 145-8501 (JP); Izumi, Hideo, c/o ALPS ELECTRIC CO., LTD., Tokyo 145-8501 (JP)
(74) Representative: Klunker . Schmitt-Nilson . Hirsch

(56) References cited:
- EP-A- 1 389 855
- JP-A- 2003 234 745
- ELIEZER O ET AL: "BLUETOOTH AND WI-FI COEXISTENCE SCHEMES STRIVE TO AVOID CHAOS" RF DESIGN, PRIMEDIA BUSINESS MAGAZINES & MEDIA, OVERLAND PARK, KS, US, vol. 24, no. 11, November 2001 (2001-11), pages 66,68,70-72, XP001089313 ISSN: 0163-321X
- CHIASSERINI C F ET AL: "Coexistence mechanisms for interference mitigation between IEEE 802.11 WLANs and bluetooth" PROCEEDINGS IEEE INFOCOM 2002. THE CONFERENCE ON COMPUTER COMMUNICATIONS. 21ST. ANNUAL JOINT CONFERENCE OF THE IEEE COMPUTER ANDCOMMUNICATIONS SOCIETIES. NEW YORK, NY, JUNE 23 - 27, 2002, PROCEEDINGS IEEE INFOCOM. THE CONFERENCE ON COMPUTER COMMUNICA, vol. VOL. 1 OF 3. CONF. 21, 23 June 2002 (2002-06-23), pages 590-598, XP010593620 ISBN: 0-7803-7476-2

## Description

### 1. Field of the Invention

The present invention relates to a wireless communication method and an information processing apparatus, and more particularly, to a wireless communication method and an information processing apparatus capable of preventing interference from occurring between different wireless communication modules when different wireless modules using the same frequency band, such as a wireless LAN module and a Bluetooth module, are stored and used in the same apparatus.

### 2. Description of the Related Art

Recently, various kinds of wireless communication methods for wirelessly connecting electric apparatuses have been developed. IEEE802.11b/g, IEEE80211g and Bluetooth are known as systems using such kinds of wireless communication methods.

The above mentioned IEEE802.11b/g is a standard of a short-range wireless communication system targeted for a wireless LAN, and the Bluetooth is a standard of a short-range wireless communication system targeted for connection between various pieces of apparatuses including computer. In the above wireless communication systems, a 2.4-GHz frequency band is used. The wireless communication of the IEEE 802.11b standard is performed by using a direct sequence type spread spectrum technique, and the wireless communication of the Bluetooth standard is performed by frequency hopping type spread spectrum technique.

Meanwhile, recently, a portable information processing apparatus such as a PDA has been widespread, and apparatuses in which the wireless LAN module and the Bluetooth module, using the IEEE802.11b/g band, are embedded therein have been commercialized. In this case, the wireless LAN module is used to receive various kinds of communications services via an access point installed in a public place or communicate with the other communication apparatus connected via the access point, and to directly communicate with the other apparatus, comprising the peripheral wireless LAN module. The Bluetooth module is used to connect the information processing apparatuses having the Bluetooth module installed therein to an input apparatus such as a display apparatus, a headset for IP telephone, a mouse and a keyboard.

As described above, since the wireless LAN module and Bluetooth module using the IEEE802.11b/g band use the same frequency band, the information processing apparatus provided with the wireless module and Bluetooth module needs to avoid an overlap of using frequency when the wireless LAN module and Bluetooth module are simultaneously used.

Accordingly, in case of communicating via the access point, the wireless LAN module reports channel information used in the wireless LAN module to the Bluetooth module existing in the same apparatus via a wiring formed by metal connecting those modules or a bus in the apparatus. The Bluetooth module communicates between the above mentioned various apparatuses by using the channel other than the channel used by the wireless LAN module.

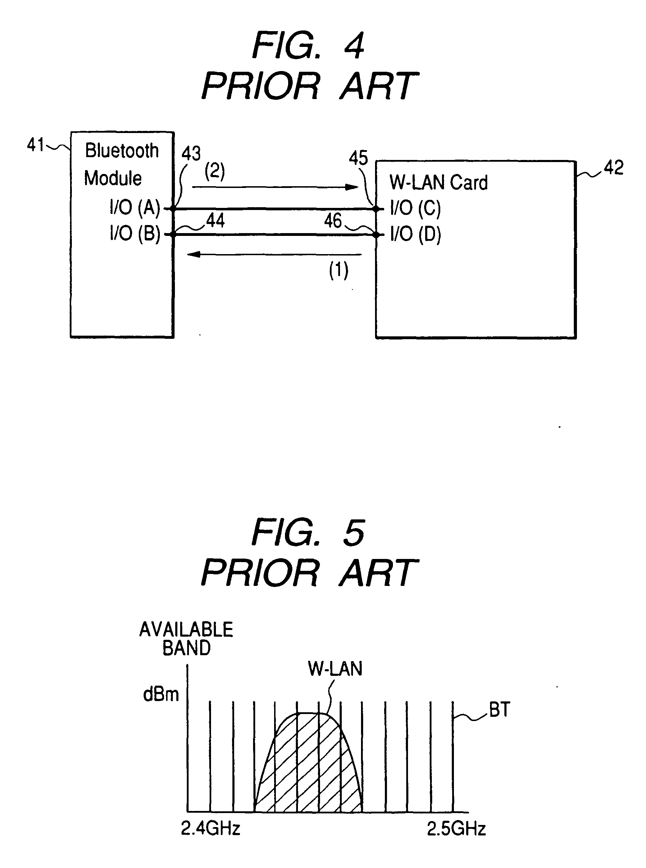

Fig. 4 shows communication between the Bluetooth module and the wireless LAN module provided in one information processing apparatus according to the related art. In Fig. 4, reference numeral 41 represents a Bluetooth module, 42 represents a wireless LAN module, and 43 to 46 represent I/O ports.

The Bluetooth module 41 and wireless LAN module 42 comprise I/O ports 43 and 44, and 45 and 46, respectively, and are connected via such I/O ports within the information processing apparatus.

In case of communicating via the access point, the wireless LAN module 42 transmits channel information used for communication via the access point from the I/O port 46 represented by the I/O(D) to the I/O port 44 represented by the I/O(B) of the Bluetooth module 41 existing in the same apparatus.(SEQUENCE 1)

When the Bluetooth module 41 receives the channel information used for communication via the access point from the wireless LAN module 42, the Bluetooth module 41 transmits the received channel information from the I/O port 43 represented by the I/O (A) of the module 41 to the I/O port 45 represented by the I/C(C) of the wireless LAN module 42.(SEQUENCE 2)

As described above, after the communication between the Bluetooth module 41 and wireless LAN module 42, the wireless LAN module 42 communicates with the access point, and the Bluetooth module 41 communicates with the other apparatus by using a channel other than the channel used by the wireless LAN module reported from the wireless LAN module 42. Thus, in this case, there is no contention between the channel used for communicating with the other apparatus in the Bluetooth module 41 and the channel used for communicating with the access point in the wireless LAN module 42.

However, in case of an Ad-hoc Mode directly communicating with the other apparatus comprising the peripheral wireless LAN module 42, the wireless LAN module 42 can not report the channel information used by the wireless LAN module 42 to the Bluetooth module 41 in the same apparatus. For this reason, at the time of communication, the Bluetooth module 41 uses frequencies of all channels included in the available frequency band sequentially while communicating.

Fig. 5 shows channel usage of the wireless LAN module and the Bluetooth module in the wireless communication method according to the related art when the wireless LAN module communicates by the Ad-hoc Mode. With reference to the Fig. 5, channel use state according to the related art will be described.

As described above, the wireless LAN module and the Bluetooth module communicate by using a 2.4 GHz frequency band. Therefore, Fig. 5 describes the channel uses state in a rage of 2.4 GHz to 2.5 GHz frequency band. The wireless LAN module 42 uses comparatively wide frequency range, which is shown as approximately trapezoid in Fig. 5, within the available frequency band, and communicates between the other apparatuses comprising the peripheral wireless LAN module. In addition, in this case, the wireless LAN module can not transmit the channel information used by the wireless LAN module to the Bluetooth module.

On the other hand, channels that can be used when the Bluetooth module 41 communicates are a plurality of channels having a narrow frequency band allocated in the available frequency band, which is shown as a bar in Fig. 5. Furthermore, since the Bluetooth module 41 does not inform the channel information used by the wireless LAN module 42, without avoiding the channel frequency band used by the wireless LAN module 42, the Bluetooth module 41 sequentially communicates by using the plurality of channels having the narrow frequency band allocated in the available frequency band, which is shown as the bar in Fig. 5.

Moreover, the related art capable of preventing contention between the channel used for communication by the Bluetooth module and the channel used for communication by the wireless LAN module is known in JP-A-2002-198867.

From JP-A-2003234745 a compound radio equipment is known comprising a wireless LAN device and a Bluetooth device, wherein mutual interference of their signals is avoided by varying the frequency band of the wireless LAN device and adaptively hopping a frequency band, which is not used for this wireless LAN device, used by the Bluetooth device.

As described above, when the wireless LAN module communicates by the Ad-hoc Mode, since the conventional wireless LAN module can not transmit the channel information used by the wireless LAN module to the Bluetooth module, the Bluetooth module communicates by sequentially using the plurality of channels allocated in the available frequency band so that the interference occurs when the available channel of the Bluetooth module is overlapped with the channel frequency band used by the wireless LAN module. Therefore, there is a problem that a throughput of communication between the Bluetooth module and the wireless LAN module decreases.

### SUMMARY OF THE INVENTION

An object of the present invention is to provide a wireless communication method and an information processing apparatus capable of preventing interference from occurring between different wireless communication modules when different wireless modules using the same frequency band are stored and used in the same apparatus.

According to an aspect of the invention, there is provided a wireless communication method in an information processing apparatus having a first and a second wireless communication modules of different communication system using the same frequency band, each of the modules being able to communicate with other apparatus independently. The wireless communication method includes the steps of: allowing the first wireless communication module to secures a frequency band used in case that the second wireless communication module directly communicates with a wireless communication module provided in the other apparatus; transmitting the channel information to the second wireless communication module; and allowing the second wireless communication module to use the channel designated by the first wireless communication module in case of directly communicating with the other apparatus.

In the wireless communication method, it is preferable that the first wireless communication module communicates with the other apparatus by using a channel other than the channel designated for the second wireless communication module.

In the wireless communication method, it is preferable that the first wireless communication module transmits the channel information used in case that the second wireless communication module directly communicates with a second wireless communication module in the other apparatus to the second wireless communication module when power is applied to an information processing apparatus comprising the first wireless communication module.

In the wireless communication method, it is preferable that the first wireless communication module is a Bluetooth module, and the second wireless communication module is a wireless LAN module.

In the wireless communication method, it is preferable that the communication between the wireless LAN module which is the second wireless communication module and a wireless LAN module provided in the other apparatus is performed by an Ad-hoc mode.

According to another aspect of the invention, there is provided an information processing apparatus having a first and a second wireless communication modules of different communication system using the same frequency band, each of the modules being able to communicate with other apparatus independently, in which the first wireless communication module comprises means for securing a frequency band used in case that the second wireless communication module directly communicates with a wireless communication module provided in the other apparatus; and means for transmitting the channel information to the second wireless communication module, and in which the second wireless communication module uses a channel designated by the first wireless communication module in case of directly communicating with the other apparatus.

In the information processing apparatus, it is preferable that the first wireless communication module communicates with the other apparatus by using a channel other than the channel designated for the second wireless communication module.

In the information processing apparatus, it is preferable that the first wireless communication module transmits the channel information used in case that the second wireless communication module directly communicates with a second wireless communication module provided in the other apparatus to the second wireless communication module when power is applied to an information processing apparatus comprising the first wireless communication module.

In the information processing apparatus, it is preferable that the first wireless communication module is a Bluetooth module, and the second wireless communication module is a wireless LAN module.

In the information processing apparatus, it is preferable that the communication between the wireless LAN module which is the second wireless communication module and a wireless LAN module provided in the other apparatus is performed by an Ad-hoc mode.

According to the invention, when different wireless modules using the same frequency band are stored and used in the same apparatus, the respective modules can communicate without interference each other and decreasing its throughput.

### BRIEF DESCRIPTION OF THE DRAWINGS

Fig. 1 is a graph explaining a use state of a channel between a wireless LAN module and a Bluetooth module in a wireless communication method according to an embodiment of the present invention.
Fig. 2 is a diagram explaining a state that an information processing apparatus using a wireless communication method according to an embodiment of the present invention directly communicates with the other information processing apparatus.
Fig. 3 is a diagram explaining a communication between a Bluetooth module and a wireless LAN module provided in one information processing apparatus in an embodiment of the invention.
Fig. 4 is a diagram explaining a communication between a Bluetooth module and a wireless LAN module provided in one information processing apparatus in a related art.
Fig. 5 is a graph explaining a use state of a channel between a wireless LAN communication module and a Bluetooth module in a wireless communications method according to a related art when a wireless LAN module communicates by an Ad-hoc Mode.

### DESCRIPTION OF THE PREFERRED EMBODIMENT

Hereinafter, an embodiment of a wireless communication method and an information processing apparatus of the present invention will be described in detail with reference to the accompanying drawings.

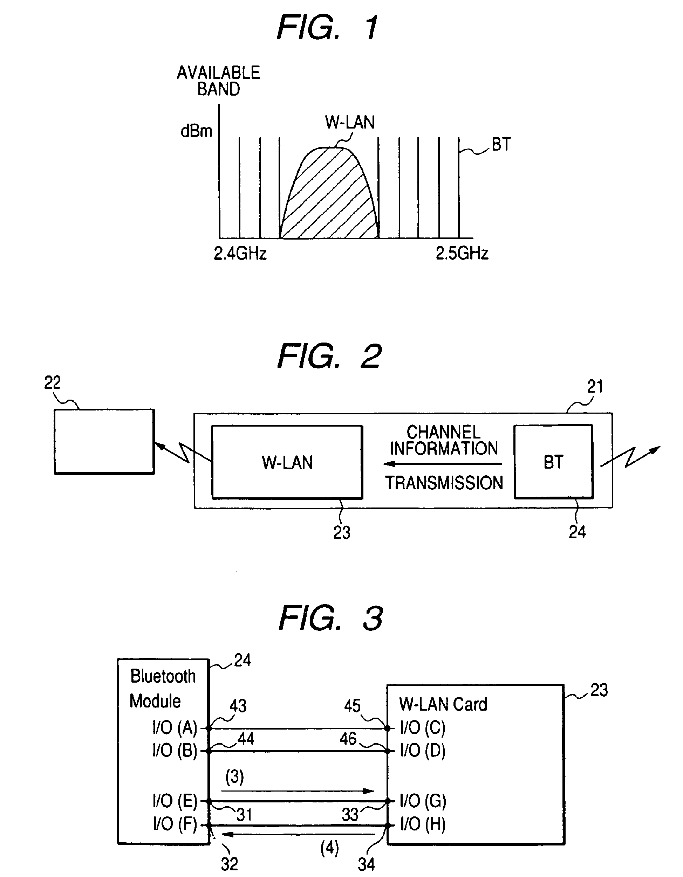

Fig. 1 is a graph explaining a use state of a channel between a wireless LAN module and a Bluetooth module according to an embodiment according to the invention, Fig. 2 is a diagram explaining a state that an information processing apparatus using a wireless communication method according to an embodiment of the invention directly communicates with the other information processing apparatus, and Fig. 3 is a diagram explaining a communication between a Bluetooth module and a wireless LAN module provided in one information processing apparatus in an embodiment of the invention. In Fig. 2 and Fig. 3, reference numerals 21 and 22 are an information processing apparatus, 23 is a wireless LAN (W-LAN) module, 24 is a Bluetooth module, and 31 to 34 are I/O ports.

The information processing apparatus 21 using a wireless communication method according to an embodiment of the invention may be a portable information processing apparatus such as a PDA, and notebook PC, etc., and comprises a wireless LAN module 23 and a Bluetooth module 24 using the same frequency band as shown in Fig. 1. Such modules 23 and 24 can independently communicate between the other apparatuses respectively, and may be provided in the information processing apparatus 21 or may be connected to an external apparatus.

When the Bluetooth module 24 communicates with other apparatus such as a headset for IP telephone not shown, the Bluetooth module 24 secures a frequency band used for the Ad-hoc Mode communication by the wireless LAN module 23, and communicates by sequentially using (hopping) a frequency of channel, which is available in the other frequency range other than its frequency band.

Next, communication transmitting a channel information of the secured frequency band used by the wireless LAN module 23 will be described with reference to Fig. 3. The Bluetooth module 24 and the wireless LAN module 23 shown in Fig. 3 are the same as the Bluetooth module 41 and the wireless LAN module 42 shown in Fig. 4.

In an example shown in Fig. 3, same as an example shown in Fig. 4, the Bluetooth module 24 and the wireless LAN module 23 comprise I/O ports 43 and 44, and 45 and 46, respectively, and a set of I/O ports 31 and 32, and 33 and 34, and connected to each other via these I/O ports.

When the Bluetooth module 24 communicates between the other apparatuses, the Bluetooth module 24 secures the frequency band used for the Ad-hoc Mode communication by the wireless LAN module 23 provided in the same apparatus, and transmits the channel information used for the Ad-hoc Mode communication from the I/O port 31 represented by the I/O(E) port of the Bluetooth module 24 to the I/O port 33 represented by the I/O port(G) of the wireless LAN module.(SEQUENCE 3)

When the wireless LAN module 23 receives the channel information used for the Ad-hoc Mode communication from the Bluetooth module 24, the wireless LAN module 23 transmits the received channel information from the I/O port 34 represented by the I/O(H) of the wireless LAN module to the I/O port 32 represented by the I/O(F) of the Bluetooth module 24.(SEQUENCE 4)

Then, when the wireless LAN module 23 directly communicates between the other information processing apparatuses 22 such as a PDA by the Ad-hoc Mode, the wireless LAN module 23 communicates with the other information processing apparatus 22 by using a channel of frequency band notified from the Bluetooth module 24.

Further, when power is applied to the information processing apparatus 21, the Bluetooth module 24 may transmit the channel information of frequency band used for the Ad-hoc Mode communication by the wireless LAN module 23 to the wireless LAN module 23.

Fig. 1 shows a use state of a channel between the wireless LAN module 23 and the Bluetooth module 24 in the above mentioned cases. The Bluetooth module 24 secures the frequency band, and then communicates by using (hopping) frequency of a channel available for in the other frequency range other than the channel of frequency band used by the wireless LAN module in which the Bluetooth informs the secured frequency band to the wireless LAN module 23. Further, the wireless LAN module 23 communicates by using a channel of frequency band transmitted from the Bluetooth module.

Sine the wireless LAN module 23 and the Bluetooth module 24 communicates by using the channel of frequency band described above, an overlap of frequency band between the channel used by the Bluetooth module 24 and the channel used by the wireless LAN module 23 can be prevented, so that the decrease of a throughput in the Bluetooth module 24 and the wireless LAN module 23 can be prevented as shown in Fig. 1.

When the wireless LAN module 23 communicates via an access point, since the wireless LAN module 23 transmits the channel information of the frequency band used by the wireless LAN module to the Bluetooth module 24 as described in the related art, there is no risk that the frequency band between the channel used by the Bluetooth module 24 and the channel used by the wireless LAN module 23 overlaps.

In the above embodiment of the present invention as described above, the information processing apparatus using the wireless communication method according to the embodiment of the invention comprises the wireless LAN module 23 and the Bluetooth module 24 using the same frequency band. However, the wireless LAN module 23 and the Bluetooth module 24 can be applied to any types of wireless communication modules capable of independently communicating while using the same frequency band.

## Claims

1. A wireless communication method in an information processing apparatus (21,22) having a first (24) and a second (23) wireless communication modules of different communication system using the same frequency band, each of the modules (23,24) being able to communicate with an other apparatus independently, the wireless communication method comprising the steps of :
allowing the first wireless communication module (24) to secure a frequency band used in case that the second wireless communication module (23) directly communicates with a corresponding wireless communication module provided in the other apparatus (22);
transmitting a channel information to the second wireless communication module (23); and
allowing the second wireless communication module (23) to use the channel designated by the first wireless communication module (24) in the channel information in case said second wireless communication module directly communicates with the other apparatus (22).

2. The wireless communication method according to Claim 1, the first wireless communication module (24) communicates with the other apparatus by using a channel other than the channel designated for the second wireless communication module (23).

3. The wireless communication method according to Claim 1 or 2, wherein the first wireless communication module (24) transmits the channel information used in case that the second wireless communication module (23) directly communicates with a second wireless communication module provided in the other apparatus (22) to the second wireless communication module (23) when power is applied to an information processing apparatus comprising the first wireless communication module (24).

4. The wireless communication method according to Claim 1, 2 or 3, wherein the first wireless communication module (24) is a Bluetooth module, and the second wireless communication module (23) is a wireless LAN module.

5. The wireless communication method according to Claim 4, wherein the communication between the wireless LAN module which is the second wireless communication module (23) and a wireless LAN module provided in the other apparatus (22) is performed by an Ad-hoc mode.

6. An information processing apparatus having a first (24) and a second (23) wireless communication modules of different communication system using the same frequency band, each of the modules (23, 24) being able to communicate with another apparatus independently,
wherein the first wireless communication module (24) comprises means for securing a frequency band used in case that the second wireless communication module (23) directly communicates with a wireless communication module provided in the other apparatus (22), and means for transmitting a channel information to the second wireless communication module (23), and
wherein the second wireless communication module (23) is adapted to use a channel designated by the first wireless communication module (24) in the channel information in case said second wireless communication module directly communicates with the other apparatus (22).

7. The information processing apparatus according to Claim 6, wherein the first wireless communication module (24) is adapted to communicate with the other apparatus by using a channel other than the channel designated for the second wireless communication module (23).

8. The information processing apparatus according to Claim 6 or 7, wherein the first wireless communication module (24) is adapted to transmit the channel information used in case that the second wireless communication module (23) directly communicates with a second wireless communication module provided in the other apparatus (22) to the second wireless communication module (23) when power is applied to an information processing apparatus comprising the first wireless communication module (24).

9. The information processing apparatus according to Claim 6, 7 or 8, wherein the first wireless communication module (24) is a Bluetooth module, and the second wireless communication module (23) is a wireless LAN module.

10. The information processing apparatus according to Claim 9, wherein the communication between the wireless LAN module which is the second wireless communication module (23) and a wireless LAN module provided in the other apparatus (22) is performed by an Ad-hoc mode.

## Patentansprüche

1. Drahtloses Kommunikationsverfahren in einer Informationsverarbeitungsvorrichtung (21, 22), die ein erstes drahtloses Kommunikationsmodul (24) und ein zweites drahtloses Kommunikationsmodul (23) von verschiedenen, das gleiche Frequenzband benutzenden Kommunikationssystemen aufweist, wobei jedes der Module (23, 24) in der Lage ist, eigenständig mit einer anderen Vorrichtung zu kommunizieren, wobei das drahtlose Kommunikationsverfahren die folgenden Schritte aufweist:
das erste drahtlose Kommunikationsmodul (24) ein Frequenzband festlegen Lassen, welches in dem Fall verwendet wird, dass das zweite drahtlose Kommunikationsmodul (23) direkt mit einem in der anderen Vorrichtung (22) bereitgestellten, entsprechenden drahtlosen Kommunikationsmodul kommuniziert;
Übertragen einer Kanalinformation an das zweite drahtlose Kommunikationsmodul (23); und
das zweite drahtlose Kommunikationsmodul (23) den von dem ersten drahtlosen Kommunikationsmodul (24) in der Kanalinformation bestimmten Kanal in dem Fall benutzen Lassen, dass das zweite drahtlose Kommunikationsmodul direkt mit der anderen Vorrichtung (22) kommuniziert.

2. Drahtloses Kommunikationsverfahren nach Anspruch 1, wobei das erste drahtlose Kommunikationsmodul (24) mit der anderen Vorrichtung kommuniziert, wobei ein anderer Kanal als der für das zweite drahtlose Kommunikationsmodul (23) bestimmte Kanal verwendet wird.

3. Drahtloses Kommunikationsverfahren nach Anspruch 1 oder 2, wobei das erste drahtlose Kommunikationsmodul (24) die Information über den Kanal, der in dem Fall verwendet wird, dass das zweite drahtlose Kommunikationsmodul (23) direkt mit einem in der anderen Vorrichtung (22) bereitgestellten zweiten drahtlose Kommunikationsmodul kommuniziert, an das zweite drahtlose Kommunikationsmodul (23) überträgt, wenn Leistung an eine Informationsverarbeitungsvorrichtung angelegt wird, die das erste drahtlose Kommunikationsmodul (24) aufweist.

4. Drahtloses Kommunikationsverfahren nach Anspruch 1, 2 oder 3, wobei das erste drahtlose Kommunikationsmodul (24) ein Bluetooth-Modul ist und das zweite drahtlose Kommunikationsmodul (23) ein drahtloses LAN-Modul ist.

5. Drahtloses Kommunikationsverfahren nach Anspruch 4, wobei die Kommunikation zwischen dem drahtlosen LAN-Modul, welches das zweite drahtlose Kommunikationsmodul (23) ist, und einem in der anderen Vorrichtung (22) bereitgestellten drahtlosen LAN-Modul in einem Ad-hoc-Modus ausgeführt wird.

6. Informationsverarbeitungsvorrichtung, die ein erstes drahtloses Kommunikationsmodul (24) und ein zweites drahtloses Kommunikationsmodul (23) von verschiedenen, das gleiche Frequenzband benutzenden Kommunikationssystemen aufweist, wobei jedes der Module (23, 24) in der Lage ist, eigenständig mit einer anderen Vorrichtung zu kommunizieren,
wobei das erste drahtlose Kommunikationsmodul (24) eine Einrichtung zum Festlegen eines Frequenzbandes aufweist, das in dem Fall verwendet wird, dass das zweite drahtlose Kommunikationsmodul (23) direkt mit einem in der anderen Vorrichtung (22) bereitgestellten drahtlosen Kommunikationsmodul kommuniziert, und eine Einrichtung zum Übertragen einer Kanalinformation an das zweite drahtlose Kommunikationsmodul (23) aufweist, und
wobei das zweite drahtlose Kommunikationsmodul (23) ausgebildet ist, einen von dem ersten drahtlosen Kommunikationsmodul (24) in der Kanalinformation bestimmten Kanal in dem Fall zu benutzen, dass das zweite drahtlose Kommunikationsmodul direkt mit der anderen Vorrichtung (22) kommuniziert.

7. Informationsverarbeitungsvorrichtung nach Anspruch 6, wobei das erste drahtlose Kommunikationsmodul (24) ausgebildet ist, mit der anderen Vorrichtung zu kommunizieren, wobei ein anderer Kanal als der für das zweite drahtlose Kommunikationsmodul (23) bestimmte Kanal verwendet wird.

8. Informationsverarbeitungsvorrichtung nach Anspruch 6 oder 7, wobei das erste drahtlose Kommunikationsmodul (24) ausgebildet ist, Information über den Kanal, der in dem Fall verwendet wird, dass das zweite drahtlose Kommunikationsmodul (23) direkt mit einem in der anderen Vorrichtung (22) bereitgestellten zweiten drahtlosen Kommunikationsmodul kommuniziert, an das zweite drahtlose Kommunikationsmodul (23) zu übertragen, wenn Leistung an eine Informationsverarbeitungsvorrichtung angelegt wird, die das erste drahtlose Kommunikationsmodul (24) aufweist.

9. Informationsverarbeitungsvorrichtung nach Anspruch 6, 7 oder 8, wobei das erste drahtlose Kommunikationsmodul (24) ein Bluetooth-Modul ist und das zweite drahtlose Kommunikationsmodul (23) ein drahtloses LAN-Modul ist.

10. Informationsverarbeitungsvorrichtung nach Anspruch 9, wobei die Kommunikation zwischen dem drahtlosen LAN-Modul, welches das zweite drahtlose Kommunikationsmodul (23) ist, und einem in der anderen Vorrichtung (22) bereitgestellten drahtlosen LAN-Modul in einem Ad-hoc-Modus ausgeführt ist.

## Revendications

1. Procédé de communication sans fil d'un dispositif de traitement de l'information (21, 22) comportant un premier (24) et un deuxième (23) module de communication sans fil d'un système de communication différent utilisant la même bande de fréquences, chacun des modules (23, 24) étant capable de communiquer indépendamment avec un autre dispositif, le procédé de communication sans fil comprenant les étapes consistant à :
permettre au premier module de communication sans fil (24) de fixer une bande de fréquences utilisée dans le cas où le deuxième module de communication sans fil (23) communique directement avec un module de communication sans fil correspondant prévu dans l'autre dispositif (22) ;
transmettre une information de canal au deuxième module de communication sans fil (23) ; et
permettre au deuxième module de communication sans fil (23) d'utiliser le canal désigné par le premier module de communication sans fil (24) dans l'information de canal dans le cas où ledit deuxième module de communication sans fil communique directement avec l'autre dispositif (22).

2. Procédé de communication sans fil selon la revendication 1, dans lequel le premier module de communication sans fil (24) communique avec l'autre dispositif en utilisant un canal différent du canal désigné pour le deuxième module de communication sans fil (23).

3. Procédé de communication sans fil selon la revendication 1 ou 2, dans lequel le premier module de communication sans fil (24) transmet l'information de canal utilisée dans le cas où le deuxième module de communication sans fil (23) communique directement avec un deuxième module de communication sans fil prévu dans l'autre dispositif (22) vers le deuxième module de communication sans fil (23) lorsqu'une alimentation est appliquée à un dispositif de traitement de l'information comprenant le premier module de communication sans fil (24).

4. Procédé de communication sans fil selon la revendication 1, 2 ou 3, dans lequel le premier module de communication sans fil (24) est un module Bluetooth et le deuxième module de communication sans fil (23) est un module de LAN sans fil.

5. Procédé de communication sans fil selon la revendication 4, dans lequel la communication entre le module de LAN sans fil qui est le deuxième module de communication sans fil (23) et un module de LAN sans fil prévu dans l'autre dispositif (22) est effectuée par un mode ad hoc.

6. Dispositif de traitement de l'information comportant un premier (24) et un deuxième (23) module de communication sans fil d'un système de communication différent utilisant la même bande de fréquences, chacun des modules (23, 24) étant capable de communiquer indépendamment avec un autre dispositif,
dans lequel le premier module de communication sans fil (24) comprend un moyen pour fixer une bande de fréquences utilisée dans le cas où le deuxième module de communication sans fil (23) communique directement avec un module de communication sans fil prévu dans l'autre dispositif (22), et un moyen pour transmettre une information de canal au deuxième module de communication sans fil (23), et
dans lequel le deuxième module de communication sans fil (23) est adapté à utiliser un canal désigné par le premier module de communication sans fil (24) dans l'information de canal dans le cas où ledit deuxième module de communication sans fil communique directement avec l'autre dispositif (22).

7. Dispositif de traitement de l'information selon la revendication 6, dans lequel le premier module de communication sans fil (24) est adapté à communiquer avec l'autre dispositif en utilisant un canal différent du canal désigné pour le deuxième module de communication sans fil (23).

8. Dispositif de traitement de l'information selon la revendication 6 ou 7, dans lequel le premier module de communication sans fil (24) est adapté à transmettre l'information de canal utilisée dans le cas où le deuxième module de communication sans fil (23) communique directement avec un deuxième module de communication sans fil prévu dans l'autre dispositif (22) vers le deuxième module de communication sans fil (23) lorsqu'une alimentation est appliquée à un dispositif de traitement de l'information comprenant le premier module de communication sans fil (24).

9. Dispositif de traitement de l'information selon la revendication 6, 7 ou 8, dans lequel le premier module de communication sans fil (24) est un module Bluetooth et le deuxième module de communication sans fil (23) est un module de LAN sans fil.

10. Dispositif de traitement de l'information selon la revendication 9, dans lequel la communication entre le module de LAN sans fil qui est le deuxième module de communication sans fil (23) et un module de LAN sans fil prévu dans l'autre dispositif (22) est effectuée par un mode ad hoc.
